# EUROPEAN PATENT APPLICATION

(11) **EP 1 318 493 A1**
(43) Date of publication of application: **11.06.2003**
(21) Application number: 02080181.7
(22) Date of filing: 09.12.2002
(51) Int. Cl.: G09B 5/14, G09B 7/04, G06F 17/30, G09B 7/02

(54) **System and method for generating an interactive course via Internet**

(30) Priority: 07.12.2001 NL 1019523
(71) Applicant: NIAM-TMS B.V., 2288 BC Rijswijk (NL)
(72) Inventor: Wijnants, Wouter, 2565 XV Den Haag (NL)
(74) Representative: Prins, Adrianus Willem

(57) **Abstract**

A system for providing an interactive course at at least one course participant, comprising at least one server and at least one client, said at least one arranged at the at least one course participant, and further includes a browser, while the at least one server and the at least one client are connected with each other via internet, the at least one server including a program to enable the interactive course to be provided to the at least one client via internet, while the at least one client can supply information to the at least one server via the internet connection for determining a continuation of the course which is provided to the at least one client by the at least one server via the internet connection, wherein the program is arranged to provide the course to the at least one client without the at least one client being provided with a plug-in.

## Description

This invention relates to a system for providing an interactive course at at least one course participant, comprising at least one server and at least one client, arranged at the course participant, which includes a browser, while the server and the client are connected with each other via internet, the server including a software course program to enable the interactive course to be provided to the client via internet, while the client can supply information to the server via the internet connection for determining a continuation of the course which is provided to the client by the server via the internet connection.

The invention also relates to a method for providing an interactive course via internet, wherein for the purpose of providing the course, use is made of a system comprising at least one server and at least one client which includes a browser, wherein the server and the client are connected with each other via internet, and wherein the server includes a software course program which provides the interactive course to the client via internet, wherein the client supplies information to the server via internet for determining a continuation of the course which is provided to the client by the server via the internet connection.

Such a system and method are known per se. In the case of an interactive course, the client can consist, for instance, of a personal computer, a laptop or a network to which a course participant has access. By means of the system, interactive courses are supplied to the course participants. These courses can comprise, for instance, pages of text or sound which are supplied via the client to the course participant. The course participant can take in the information obtained via the client, process it and in response supply information to the client. This information determines the continuation of the course. The information can consist, for instance, in giving an answer to a question, selecting a course assignment, requesting further information, etc.

A disadvantage of the known systems and methods is that the client utilizes a plug-in. A plug-in is a software program which is added to the browser in order for the combination of browser and plug-in to cooperate with the course program of the server to output the course. This plug-in can for instance be supplied to the client from the server via internet. It is also possible to supply the plug-in to the client e.g. via a diskette or a cd-rom. This requires additional operations for the course participant who is often not familiar with them. Installing the plug-in is therefore a source of technical problems. Moreover, especially when the plug-in is downloaded via Internet, it is a justified concern of the course participant that the plug-in may include a virus or worm. The object of the invention is to provide a solution to the problems outlined.

Accordingly, the system according to the invention is characterized in that the course program is arranged to provide the course to the client without the client being provided with a plug-in. The invention thus breaks with the tradition that a system for providing an interactive course is provided with a plug-in.

As the client is not provided with a plug-in, a course participant, for instance with his personal computer, can make direct contact with the server via internet and start the course. Also, a course participant, for instance with his personal computer, can make direct contact with the server via intranet and start the course. In the present application, therefore, internet is understood to cover intranet.

In particular, the course program includes an internet application which is built up according to a client-server architecture and at least one database which is read out by the internet application, and optionally filled, for providing a course to the client. The course program may preferably include a course database and a course participant database. In particular, the course program further comprises a skin database.

The course database includes course content and a course architecture. Also, the course database may further include glossaries and/or references to media. These media may be stored on the server and/or at the client.

The course participant database comprises course information which is related to the course participant, such as test results, numbers of course sessions traversed by the course participant, course session time spent by the course participant, etc.

The skin database may comprise references to graphics from which a graphical user interface for the client is built up.

In particular, a course is divided up into pages, whereby, in use, for supplying a page to the client, information is retrieved from the course database by the internet application, on the basis of which a page can be composed, the retrieved information is transmitted via the internet connection to the client and the client with the browser puts this information together to form a page which is supplied by the client to the course participant through image or sound. The retrieved information may include a predetermined page type and information with which the page type is filled.

According to a favorable embodiment of the system according to the invention, the client is arranged to determine the direction of the course with the course participant in an interactive manner. The client then functions as a dynamic user interface. It is then possible for the client to perform operations and/or calculations on which the further progress of the course is based. The course participant can take the initiative towards determining a desired progress of the course by way of an interactive process with the client. According to a particular embodiment of the system according to the invention, the initiative can also be taken by the client. Thus, it is conceivable that the client monitors what particular progress the course participant is making and on the basis thereof renders an advice to the course participant on a possible continuation of the course (for instance a different subject or a different level). The client can (possibly upon request) provide an overview of possible course components that can be done, from which the course participant can make a selection. The client can support the course participant in selecting course components, inter alia by processing relevant information, filtering same and/or retrieving specific information from the server. In a more general sense, the client can determine at what time relevant information during the traversal of course components is to be retrieved at the server.

The above-mentioned interactive process between the course participant and the client makes it possible, for instance, for the course participant to stop the progress of the course at a time selected by him and to resume it at a later time. According to an advanced embodiment, the client is arranged to interactively provide parts of the course to the course participant in so-called partly "refreshed" pages. The client here controls the interactive process, on the basis of the information entered by the course participant, such that only a portion of a page displayed on a monitor at the course participant's is modified. An example of this is a situation where a course participant enters an answer to a question into the system by selecting a particular figure from a group of figures depicted on the page. If an incorrect selection has been made, the respective figure can be provided with a red frame. Optionally (for instance shortly after), the correct figure from the group of figures can be provided with a green frame.

In principle, the client can perform all operations and/or calculations that are required in order for the course, on the basis of the dialogue (interactive process) between course participant and client, to be provided to the course participant. It is preferred, however, to arrange for operations and/or calculations with information-sensitive data to be performed not by the client but by the server. What is achieved by having answers to questions of a course test checked not by the client but by the server, is that it is impossible for a hacker to extract the correct answers fraudulently from the source code present in the client, since the source code which includes the answers is then in a (protected) server.

The method for providing the interactive course is characterized in that the server, by means of the course program, provides the course to the client without the client being provided with a plug-in.

The invention will presently be further elucidated on the basis of an exemplary embodiment.

In the drawing:
Fig. 1 shows a possible embodiment of a system according to the invention for practicing a possible embodiment of a method according to the invention;
Fig. 2 shows a schematic representation of a software program of the server of Fig. 1; and
Fig. 3 shows a flow diagram illustrating a possible operation of the system according to Fig. 1.

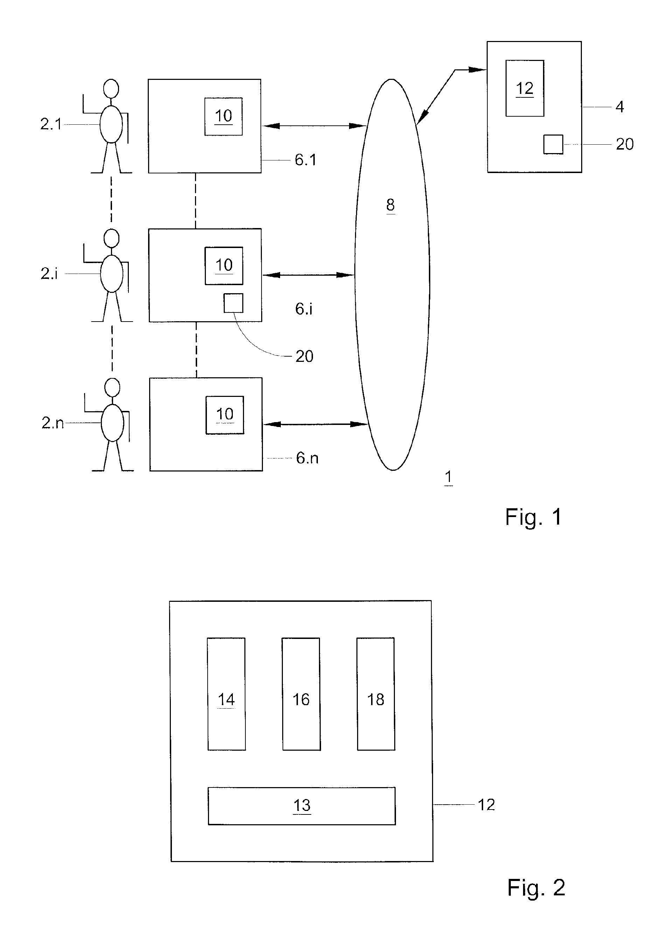

In Fig. 1, reference numeral 1 designates a system for providing an interactive course at a number of course participants 2.i (i=1,2,3...,n). The system comprises at least one server 4 and a number of clients 6.i (i=1,2,3...,n) which are connected with the server 4 via an internet connection 8. Each client 6.i includes a browser 10, known per se, such as, for instance, Internet Explorer or Netscape Navigator. Further, the server 4 includes a software course program 12 to enable an interactive course to be provided to the clients via the internet connection 8.

In this example, the number of clients is equal to the number of course participants. However, this is not requisite. A single course participant can, if desired, make use of different clients, as desired. Also, a single client can provide different courses to different course participants.

A client 6.i can for instance consist of a personal computer, a laptop or a network to which a number of work stations are connected. Of importance is only that a course participant identifies himself at the system, on the basis of which the system can provide the interactive course relevant to the respective course participant to the respective course participant. In the following, it is set out in what way the course participant 2.i, with the aid of the client 6.i, is supplied with an interactive course from the server 4 via the internet connection 8.

The course program 12 is arranged to provide the course to the client 6.i (i=1,2,3..., n) without the client 6.i being provided with a plug-in. To that end, the program 12 includes an internet application 13 which is built according to a client-server architecture and at least one database 14, 16, 18 which is read out by the internet application 13, and optionally filled, for providing the course to the client. In this example, the course program 12 includes a course database 14, a course participant database 16 and an optional skin database 18 (see Fig. 2). The course database 14 is filled with a course architecture and a course content. The course architecture comprises the framework of the course which, in use, is filled with course content and thus is provided to a course participant. The course database in this example further includes glossaries and references to media (photographs, film, video, etc.). The media 20 may be stored on the server 4 and/or at client 6.i. The course participant database 16 includes course participant information which is related to the course participant, such as test results, page views, number of course sessions traversed by the course participant, course session time spent by the course participant, etc. The skin database includes references to graphics from which a graphical user interface for the client is built up. The course database and course participant database can have been made with EasyGenerator. The skin database can have been made with a skin editor. The internet application 13 communicates with the course database and course participant database 10, 16, communicates with the skin database 18, drives the client 6.i (through generating (D)(X) HTML) and updates session data (including information received from the client). The client 6.i takes care of the representation of the contents of the course, the interaction with the user and the transmission of the input of the user back to the server. Further, a fat client/thin server architecture is employed, so that the server can drive many clients.

The course itself is divided up into pages. In use, for the supply of a page to the client, the internet application 13 retrieves information from the course database 14 on the basis of which the page can be composed. The retrieved information is supplied via the internet connection 8 to the client 6.i. The retrieved information is further processed by the browser of the client 6.i and is assembled to form a page which is supplied by the client to the course participant through image or sound. The retrieved information is provided with a predetermined page type and information with which the page type can be filled for obtaining the page. In this example, there are two different kinds of page types, viz. a query page type and an information page type. A page which is supplied by the client to the course participant may include text, still pictures, moving pictures, sound, etc. These texts, still pictures, moving pictures and/or sound can further comprise references to other pages. The references to other pages are designed to be activatable at the client by a course participant. Activation can be carried out, for instance, with the aid of a mouse or keyboard.

The system is further arranged to carry out activation for instance via hotspots, hyperlinks, navigation buttons in the graphical user interface or through answering a question.

The server can drive the client via (D)(X) HTML.

In the course participant database, information about a course participant is stored, such as the identity of the course participant, an identification of courses taken and/or to be taken by the course participant, progress results of the course achieved by the course participant and the course test results achieved by a course participant.

With the aid of a skin editor by a provider of the course, for instance each course (or play application) can be given its own look and feel by himself defining the graphics, interaction and layout of the graphical user interface. On the server, an unlimited number of courses may be installed. For the different page types, for each page, a generic module is stored in the internet application. Agreements within these modules exist in the form of submodules which can be reused in this manner within the generic module. On the basis of the information (obtained from the course database) a clientside code is generated. This clientside code takes care of the presentation, interaction and feedback.

In respect of information-sensitive parts (such as, for instance, a final test), security has been incorporated. This involves the use of serverside protection routines (since client routines are generally not reliable). The security takes, for instance, three aspects into account.

First, taking care of absence of sensitive information at the client. The clientside code is here built up such that the answer cannot be extracted from the code at the time when the answer to the question has not been given yet. The answer is not encrypted but is not present at the client at the time when the question is being asked. When the question is answered, a client/server interaction takes place, whereby (serverside) the answer is checked and (clientside) feedback is presented. Here, only a hidden part of the page is refreshed to allow the client/server interaction to take place and to update the page.

Secondly, security incorporates a resubmission check of information. When answering each question (in the final test), it is checked whether the question has not been answered before (within the current session). Thus, the course participant retains the liberty of using "forward" and "back" buttons of the browser, but a question answered earlier cannot be answered once more.

Thirdly, protection incorporates referrer check of information which has come in. The origin of the data is verified to check whether a course participant does not try to communicate directly with one of the above-mentioned databases of the server, bypassing the internet application 13 of the server. As a consequence, verification components within the system can only receive data from components within the system itself.

According to the invention, no plug-in is needed at the client. This can be accomplished, for instance, in that the program 12 for providing the course is designed primarily to enable use on a stand-alone computer.

Next, according to the development strategy of the invention, all functionalities within the stand-alone player (the plug-in) are listed and split into subproblems to eliminate these iteratively. What is comes down to is that per information/query page, the functionality has been analyzed, whereupon the functionality has been emulated using, for instance, XHTML or DHTML (in the form of HTML, JavaScript and CSS). So a (specific) measure to obviate the plug-in is to convert Authorware functionality to DHTML. This eliminates the necessity for a plug-in. DHTML is also designated as D(X) HTML. Authorware is a high-end author language of the American company Macromedia Inc. The product was originally developed in 1986 by the American company Authorware Inc., which through a merger with the American company Macromind subsequently changed to Macromedia.

Authorware is known worldwide as the top environment of making Interactive Computer Based Training and Web Based Training. Applications made in Authorware can be played on the PC by the end user with a runtime executable. After Internet became popular and Browsers were introduced, there also arose a need to be able to play applications made with Authorware via the internet. This need was accommodated by making a so-called plug-in available, which consists of a special form of runtime executable which is installed in the browser. In fact, thus a situation is created where, when playing an Authorware application via the internet, the Browser recognizes this and starts up the Authorware runtime executable present in the browser whereupon the Authorware application can be played as an application integrated into the browser.

So, in fact, the browser is used solely to start up and close the Authorware runtime executable and the application is still simply played by the Authorware runtime. Making a native webplayer instead of the runtime executable was regarded as an impossibility.

With the technique presently developed according to the invention, the use of this runtime executable can be completely circumvented, thereby preventing the necessity of first having to download and install a runtime. Further, the use of this kind of plug-ins such as the Authorware plug-in presents great problems in corporate networks, so that implementation of e-learning solutions with the possibilities such as they can be realized with Authorware is rendered more difficult. With the present plug-in-less solution, these problems are no longer an issue.

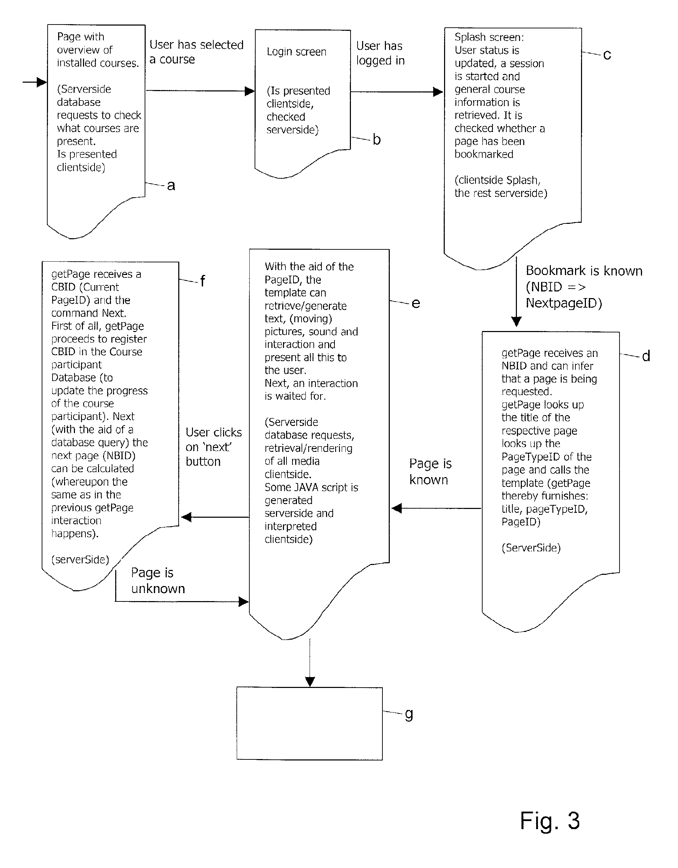

A possible example on the basis of which a course participant can query the system for and be supplied with a course is discussed with reference to Fig. 3. Fig. 3 gives a flow diagram of selecting a course, logging in, opening the first page, opening a second page using a next button, etc. The first page in this example has been bookmarked during a previous session. If there is no bookmarking, a main menu is presented, from which a selection can be made from chapters present there.

In method step A, a page with an overview of installed courses is depicted. To that end, serverside, the internet application 13 executes a database request to check what courses are present. Clientside, requested data are presented. Clientside, the course participant selects a course, for instance by energizing, with a mouse, a button of the information presented clientside. Next, in method step B, a login screen is generated. The login screen is selected from the course database serverside and presented clientside. Clientside, the course participant can for instance enter his identity, which is subsequently supplied to the server via internet. The server checks the identity of the course participant. If it agrees with the information stored in the course participant database, the course participant is logged in. Next, in method step C, a splash screen is depicted. This is the first screen of a course. A user status is updated (writing in the course participant database 16) and a session is started and general course information is retrieved (from the course database 14). It is checked whether a page has been bookmarked. The display of the splash screen is executed clientside. The other operations are executed serverside. This means that the information for displaying the splash screen (a page) is retrieved from the course database by the internet application 13. The internet application 13 transmits this information via the internet connection 8 to the client 6.i and the client 6.i puts this information together by means of the browser 10 to form the splash screen to be displayed.

When a bookmark is known, this indicates on what page the course is to be continued. On the basis of the bookmark (the page shown last in the previous session), this is determined by the subroutine NBID of the internet application (method step D). NBID stands for Next Page ID. A subroutine getPage of the internet application 13 receives the NBID and infers that a page is being requested. GetPage looks for a title of the respective page in the course database 14. Further, getPage looks for a page typeID of the page in the course database 14 and calls a template. This template is a part of the internet application 13. GetPage thereby furnishes: title, page typeID, and pageID. All this is executed serverside. The depicted page is presently known. Next, method step E is executed. With the aid of the pageID text, the template can retrieve or generate (moving) image, sound and/or interaction and present all this to the user. The database requests needed in method step E are executed serverside. The retrieval/rendering of media such as moving pictures are executed clientside. This involves some JAVA scripts being generated serverside and interpreted clientside. Next, after method step E, an interaction is waited for. The user can press for instance a depicted "next" button. After that, method step F is executed. In method step F, getPage receives a CBID (Current PageID) and the command Next. First of all, getPage proceeds to register CBID in the course participant database to update the progress of the course participant. Next, with the aid of a database query (NBID) the next page is calculated. After that, the method steps D and E are executed in repeat. Method step F is executed serverside. After executing method step F, the next page is known. This is followed by the method step E again.

After method step E has been executed, the user can proceed to press the button 'stop course'. After this, method step F is executed, except that presently getPage receives CBID and the command "Stop" instead of the command "next". First of all, getPage proceeds to register CBID in the course participant database again (to update the progress of the course participant). Next, with the aid of a database query, the stop page can be calculated. Again, all this is done serverside. Next, in step E the stop page is depicted, followed by waiting for an interaction whereby the user, for instance, indicates that he agrees with the termination of the course. When agreed, the course participant is logged off (step G).

In this example, the client uses Microsoft Internet Explorer 5 or higher. The application can be presented using the following techniques:
- XHTML (A reformulation of Hypertext Markup Language 4.01(SGML application ISO 8879) in XML 1.0)
- DHTML (using):
   - XHMTL(A reformulation of Hypertext Markup Language 4.01(SGML application ISO 8879) in XML 1.0)
   - CSS (CSS Level 1/partly CSS level 2)
   - JavaScript 1.2 (or higher)
All the above techniques can be interpreted directly by Internet Explorer 5.0 (or higher) without installing additional components.
In respect of the server, the following applies:
Operating system:
   - Windows NT 4 Service Pack 3 (or higher) :
      - Windows NT 4 Service Pack 3 ⇒IIS 3.0, ASP 1.0
         (Requisite)(free of charge) Windows NT Option Pack ⇒ IIS 4.0, ASP 2.0
   - Windows 2000 (or higher) ⇒ IIS 5.0, ASP 3.0
   - Windows XP (or higher) ⇒ IIS 6.0, ASP 3.0
Webserver:
   - Internet Information Server 3.0 (or higher)
Scripting engine:
   - ASP 1.0 (or higher), is part of IIS (from version 4.0)
   - Use is made of VBScript
As a database engine, use can be made of:
   - Microsoft Access Driver (MS Access does not need to be installed)
The Server component can be installed on a Windows NT 4 Service Pack 3 machine (or higher) with IIS 4.0 (or higher). IIS 4.0 is part of Service pack 3. No additional components need to be installed on the server. The system is also functional under Personal Webserver (PWS) on Windows 9x/Me for providing the application over a Local Area Network (LAN). Clients can sign on to the system using an Internet Explorer 5.0 (or higher) user agent without additional components needing to be installed.

However, the invention is not in any way limited to this specific embodiment, but other applications, such as Netscape Navigator, other database engines and other operating systems are also conceivable. It is essential, however, that no use is made of a plug-in. The system has presently been discussed with reference to a single course and a single course participant. However, the system may include multiple courses and multiple course participants whose identity is included in the course participant data base. Such variants are each and all understood to fall within the scope of the invention.

## Claims

1. A system for providing an interactive course at at least one course participant, comprising at least one server and at least one client, arranged at the course participant, which includes a browser, while the server and the client are connected with each other via internet, the server including a program to enable the interactive course to be provided to the client via internet, while the client can supply information to the server via the internet connection for determining a continuation of the course which is provided by the server to the client via the internet connection, **characterized in that** the program is arranged to provide the course to the client without the client being provided with a plug-in.

2. A system according to claim 1, **characterized in that** the client is arranged to function as a dynamic user interface for determining the progress of the course in an interactive manner with the course participant.

3. A system according to claim 1 or 2, **characterized in that** the client is arranged for executing operations and/or calculations for determining the progress of the course.

4. A system according to any one of claims 1-3, **characterized in that** the client is arranged, on the basis of information entered by the course participant, and/or information available in the client and/or server, to compose an advice on the course's progress to be pursued and to provide the advice to the course participant.

5. A system according to any one of claims 1-4, **characterized in that** the client is arranged to provide the course to the course participant in page form, the client being further arranged to at least partly adapt and/or modify the pages provided to the course participant on the basis of information entered by the course participant ("refreshed" pages).

6. A system according to any one of claims 1-5, **characterized in that** the program includes internet application which is built up from a client-server architecture and at least one database which is read out by the internet application for providing the course to the client.

7. A system according to claim 6, **characterized in that** the program includes a course database, a course participant database and optionally a skin database.

8. A system according to claim 7, **characterized in that** the course database includes course content and course architecture.

9. A system according to claim 8, **characterized in that** the course database further includes references to media and any glossaries.

10. A system according to claim 9, **characterized in that** the media are stored on the server and/or the client.

11. A system according to any one of the preceding claims 7-10, **characterized in that** the course participant database includes course participant information which is related to the course participant, such as test results, page views, number of course sessions traversed by the course participant, course session time spent by the course participant.

12. A system according to any one of the preceding claims 7-11, **characterized in that** the skin database comprises references to graphics from which a GUI (Graphical User Interface) for the client is built up.

13. A system according to any one of claims 6-12, **characterized in that** a course is divided up into pages, whereby, in use, for supplying a page to the client, information is retrieved from the course database by internet application, on the basis of which a page can be composed, the retrieved information is transmitted via internet to the client and the browser of the client composes the information to form a page which is supplied to the course participant by the client through image or sound.

14. A system according to claim 13, **characterized in that** the retrieved information comprises a predetermined page type and information with which the page type is filled.

15. A system according to claim 14, **characterized in that** the database comprises at least one input page type and one output page type.

16. A system according to claim 13, 14 or 15, **characterized in that** in use a page can be provided with text, still pictures, moving pictures, sound and/or references to other pages.

17. A system according to claim 16, **characterized in that** references to other pages are designed to be activatable by a course participant at the client, for instance with the aid of a mouse or keyboard.

18. A system according to claim 17, **characterized in that** the system is arranged to execute activation for instance via hotspots, hyperlinks, navigation buttons in a GUI or by answering a question.

19. A system according to any one of claims 6-18, **characterized in that** in the course participant database information about a course participant is stored, such as the identity of the course participant, an identification of the courses taken and/or to be taken by the course participant, the course participant's course progress results and course test results achieved by a course participant.

20. A system according to any one of the preceding claims, **characterized in that** the server drives the client via DHTML or XHTML.

21. A method for providing an interactive course via internet, wherein for the purpose of providing the course, use is made of a system comprising at least one server and at least one client which includes a browser, wherein the server and the client are connected with each other via internet, and wherein the server includes a program which provides the interactive course via internet to the client, wherein the client supplies information to the server via internet for determining a continuation of the course which is provided to the client by the server via internet, **characterized in that** the server through the program provides the course to the client without the client being provided with a plug-in.

22. A method according to claim 21, **characterized in that** for providing the course the following method steps are carried out: the server selects information from the database which is transmitted to the client; the client, based on the information received from the server, supplies a page of a course to a user; at the client, the user enters information in response to the depicted page; the client transmits the entered information to the server and the server selects, on the basis of the received entered information, information about a new page for supply to the client.

23. A method according to any one of the preceding claims 21 or 22, **characterized in that** the method is carried out with the aid of the system according to any one of the preceding claims 1-20.
